(19) Europäisches Patentamt
European Patent Office
Office européen des brevets

(11) Numéro de publication: **0 275 793 B1**

(12) **FASCICULE DE BREVET EUROPEEN**

(45) Date de publication de fascicule du brevet:
10.07.91

(51) Int. Cl.⁵: **B23B 27/16**

(21) Numéro de dépôt: 87402986.1

(22) Date de dépôt: 24.12.87

(54) **Dispositif pour la fixation démontable d'une plaquette de coupe sur un porte-outil.**

(30) Priorité: 30.12.86 FR 8618348

(43) Date de publication de la demande:
27.07.88 Bulletin 88/30

(45) Mention de la délivrance du brevet:
10.07.91 Bulletin 91/28

(84) Etats contractants désignés:
AT BE CH DE ES GB GR IT LI LU NL SE

(56) Documents cités:
DE-A- 1 602 721
FR-A- 1 562 462
FR-A- 1 562 463
US-A- 3 341 923
US-A- 3 747 179

(73) Titulaire: **SOCIETE INDUSTRIELLE D'ELECTRO-METALLURGIE, Société Anonyme**
**1 rue Villaret-de-Joyeuse**
**F-75008 Paris(FR)**

(72) Inventeur: **Viellet, Guy**
**52, Boulevard Maillot**
**F-92200 Neuilly sur Seine(FR)**

(74) Mandataire: **Caunet, Jean et al**
**Cabinet BEAU DE LOMENIE 55, rue d'Amsterdam**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un dispositif pour la fixation démontable d'une plaquette de coupe sur un porte-outil.

Un tel dispositif est connu notamment par le brevet français 2.109.189. Le porte-outil présente une face d'appui et deux faces de butée en forme de dièdre perpendiculaire à ladite face d'appui, pour recevoir la plaquette. Ce dispositif connu comporte une vis dont la tige filetée susceptible d'être vissée dans un trou taraudé du porte-outil traverse un trou cylindrique de la plaquette qui est excentré lorsque celle-ci est convenablement positionnée au contact des faces précitées et sans que la paroi de ce trou excentré touche à la tige de la vis. La tête de cette vis présente une portée tronconique coopérant avec une portion angulaire d'une portée également tronconique bordant le trou excentré de la plaquette afin de presser les flancs de celle-ci contre les faces de butée du porte-outil et concomitamment de serrer ladite plaquette contre la face d'appui dudit porte-outil.

La présente invention a pour but d'améliorer cette fixation pour que la plaquette fasse parfaitement corps avec le porte-outil et qu'ainsi aucune vibration n'apparaisse entre eux sous l'effet des sollicitations auxquelles ladite plaquette est soumise pendant la coupe.

Dans ce but et conformément à l'invention, la tête de vis comporte à partir de la tige pour constituer une surface de contact avec la plaquette :

- une portée tronconique de faible étendue longitudinale qui est prévue, en coopérant avec le bord du trou excentré de la plaquette pour approcher le ou les flancs de ladite plaquette, de la ou des faces de butée du porte-outil et commencer à les presser l'un contre l'autre en faisant fléchir la tige de la vis,
- une portée sensiblement cylindrique qui est prévue, en coopérant avec la paroi du trou excentré de la plaquette pour presser davantage lesdits flancs contre lesdites faces en raccourcissant le porte à faux fléchissant (p) de ladite tige pour une flèche sensiblement constante,
- et un épaulement faisant saillie du trou excentré de la plaquette pour serrer celle-ci contre la face d'appui du porte-outil.

Le brevet français n° 1.562.463 décrit un dispositif de fixation d'une plaquette de coupe sur un porte-outil.

Dans ce brevet, le porte-outil présente une face d'appui et deux faces angulaires de butée coopérant avec des faces conjuguées de la plaquette. Le dispositif comporte une tige cylindrique reliée à une tête cylindrique par un collet aminci susceptible de se déformer élastiquement pour que les axes de la tige et de la tête forment un angle et engendrant un rappel élastique. La tige et la tête s'ajustent sans jeu dans des trous lisses du porte-outil et de la plaquette, trous qui sont excentrés l'un par rapport à l'autre pour que, lors de l'engagement de la tige facilité par un chanfrein reliant la tête au collet, le collet se cambre et qu'ainsi par rappel élastique la tête applique la plaquette contre les faces de butée. Le serrage de la plaquette sur la face d'appui est très limité.

L'absence de jeu entre la tête et le trou de la plaquette, ainsi que l'absence de portée libre entre la tête et la partie encastrée de la tige conduisent à ce que la tête cylindrique et le chanfrein ne peuvent pas remplir les fonctions précitées des portées de l'invention.

Avantageusement, dans l'invention, l'épaulement de la tête de vis est tronconique et prévu, en coopérant avec le bord excentré de la plaquette, pour presser progressivement ladite plaquette contre la face d'appui du porte-outil.

La ou les faces de butée du porte-outil sont, entre le dégagement situé près de la face d'appui et son ou leur bord extérieur, en dépouille comprise entre 15 minutes et un degré pour que les flancs de la plaquette portent d'abord contre le bord extérieur de la ou lesdites faces de butée.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

- la figure 1 est une vue de dessus d'un porte-outil sur lequel une plaquette de coupe est fixée au moyen du dispositif de l'invention,
- la figure 2 est une coupe prise à plus grande échelle suivant la ligne II-II de la figure 1.
- les figures 3 à 5 sont des vues partielles analogues à la figure 2 présentées à plus grande échelle en vue synoptique pour illustrer le mode d'intervention phase après phase de la vis de fixation.

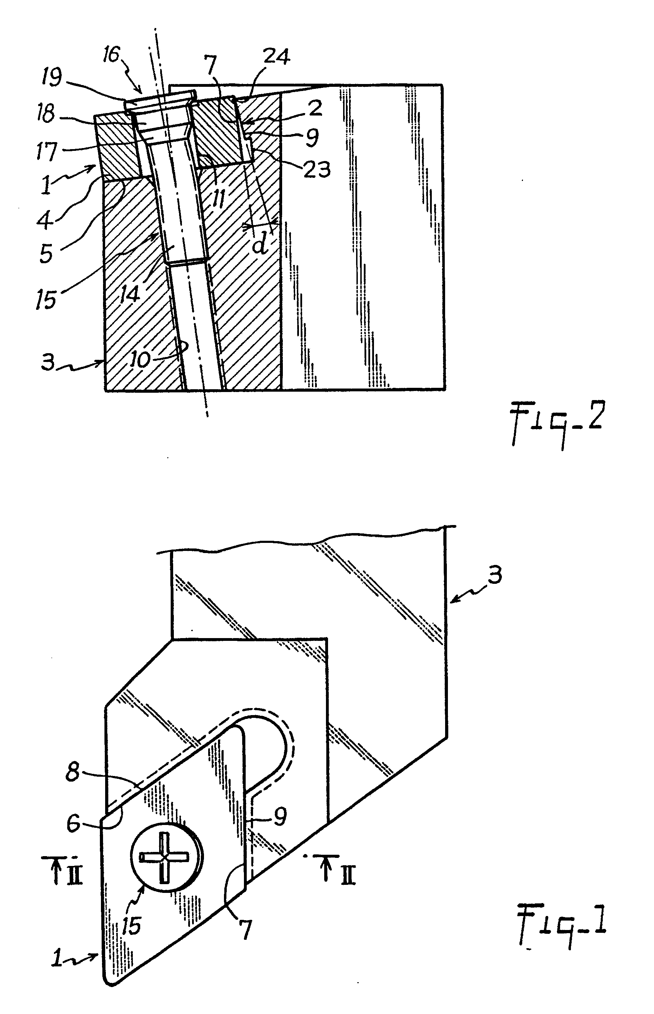

Comme le montrent les figures 1 et 2, la plaquette de coupe 1 est positionnée dans un logement 2 d'un porte-outil 3 et il s'agit de la fixer fermement et précisément sans jeu dans ledit logement relativement audit porte-outil.

Dans l'exemple représenté, la plaquette 1 présente la forme d'un prisme droit à base de losange et dès lors sa base 4 est normalement posée sur une face d'appui 5 du logement 2 du porte-outil, tandis que ses flancs 6 et 7 sont appliqués contre les faces de butée 8 et 9 respectivement dudit logement.

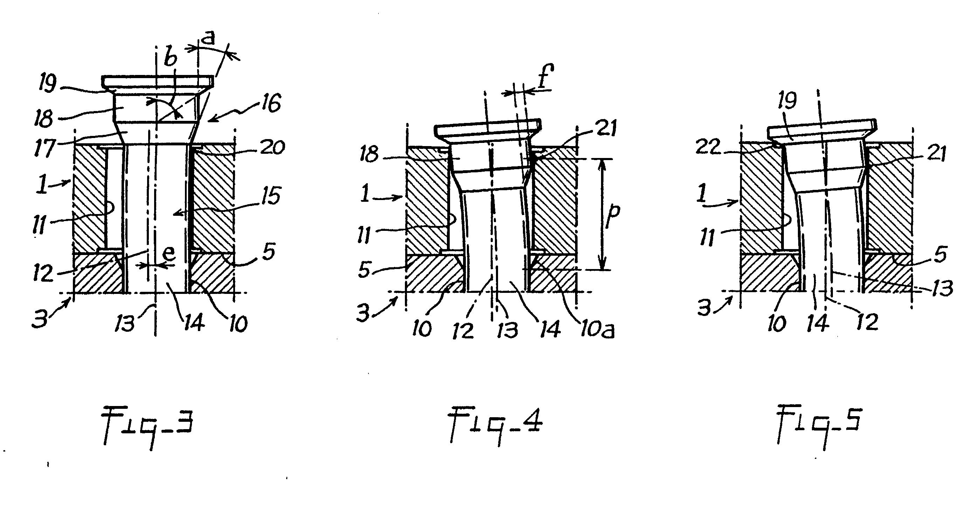

Un trou taraudé 10 est usiné dans le porte-outil 3 perpendiculairement à la face d'appui 5 et sensiblement au centre de la plaquette 1. Celle-ci délimite un trou cylindrique 11 (figures 2 à 5) dont l'axe 12 est excentré par rapport a l'axe 13 du trou taraudé 10 lorsque les flancs 6 et 7 de ladite plaquette sont en contact avec les faces de butée 8 et 9 du logement 2 du porte-outil 3. Dans cette position, la tige filetée 14 d'une vis de fixation 15 ne touche pas à la paroi du trou 11 de la plaquette lorsque cette tige est vissée dans le trou taraudé 10 et que la tête 16 de ladite vis est située hors de ce trou 11 (figure 3).

La tête 16 présente une forme particulière et comporte, à partir de la tige 14, une portée tronconique 17, une portée sensiblement cylindrique 18 et un épaulement 19. Ces différentes parties 17 à 19 de la tête sont dimensionnées par rapport au diamètre du trou 11, à l'excentration "e" de ce trou relativement au trou taraudé 10, au diamètre de la tige filetée 14 et à l'épaisseur de la plaquette 1, pour que la vis 16 intervienne lors de son vissage selon différentes phases successives illustrées par les figures 3 à 5 et décrites ci-après.

Au début du vissage (figure 3), la portée tronconique 17, dont la pente "a" par rapport à l'axe peut être comprise entre 42 et 44 degrés, entre en contact avec la partie arquée 20 du bord extérieur du trou 11, la plus proche des faces 6 et 7 et provoque, en raison de sa pente, d'abord la mise en contact des flancs 6 et 7 de la plaquette avec les faces de butée 8 et 9 du logement 2 du porte-outil et ensuite lorsque ce contact est établi, la flexion de la tige 14 de la vis 15 dont l'axe 13 commence à s'infléchir comme cela est illustré par la figure 4 pour la phase suivante. Dès lors, la plaquette 1 se trouve, par réaction à la déformation élastique de la tige 14, appliquée fermement contre les faces de butée 8 et 9 du logement 2 du porte-outil.

Le vissage se poursuit en amenant au contact de la partie arquée 20 du bord extérieur du trou 11, la portée cylindrique 18 de la tête de vis 16 (figure 4). Au fur et à mesure que le vissage se poursuit, le point de contact 21 de cette portée cylindrique 18 sur la paroi du trou 11 se rapproche de la face d'appui 5 du porte-outil. Dès lors, le porte-à-faux fléchissant "p" de la tige 14 de vis diminue alors que la flèche "f" reste sensiblement constante ; le porte-à-faux "p" est à compter du point de contact 21 jusqu'au fond du fraisage 10a qui affleure sur la face d'appui 5 du porte-outil et dans lequel débouche le trou taraudé 10. Par suite, la déformation élastique de la tige de vis 14 augmente et la réaction de la tige à cette déformation croit, ce qui a pour effet d'augmenter la force pressante des flancs 6 et 7 de la plaquette contre les faces de butée 8 et 9 du porte-outil.

A la fin du vissage (figure 5), l'épaulement 19 de la tête s'appuie contre la partie arquée 22 du bord du trou 11 opposée à la partie 20 précitée, ce qui a pour effet d'assurer le serrage de la plaquette 1 contre la face d'appui 5 du porte-outil.

Il peut être avantageux, ainsi que cela ressort de la figure 5, que l'épaulement 19 soit tronconique afin qu'en raison de sa pente "b", le serrage de la plaquette sur le porte-outil soit progressif. Cette pente peut être par exemple de 20 degrés.

Il résulte de ce qui précède que, grâce à la forme particulière de la tête 16 de la vis 15, cette vis intervient d'abord pour presser les flancs 6 et 7 de la plaquette 1 contre les faces de butée 8 et 9 du porte-outil 3 et ensuite pour serrer la base 4 de ladite plaquette contre la face d'appui 5 dudit porte-outil. Ces phases étant successives, la fixation de la plaquette se trouve assurée dans de bien meilleures conditions et de telle manière que ladite plaquette fait parfaitement corps avec le porte-outil.

Enfin, pour que la planéité de l'assise de la plaquette sur le porte-outil soit garantie, il peut être avantageux de prévoir un dégagement 23 (figure 2) dans les faces de butée 8 et 9, au ras de la face d'appui 5. De plus, il peut être intéressant de donner à ces faces de butée 8 et 9 une faible dépouille "d" pour que les flancs 8 et 9 de la plaquette portent d'abord contre le bord extérieur 24 desdites faces de butée. L'angle de dépouille "d" peut être compris entre 15 minutes et 1 degré. Il est de préférence égal à 30 minutes.

**Revendications**

1. Dispositif pour la fixation démontable d'une plaquette de coupe (1) sur un porte-outil (3) présentant une face d'appui (5) et au moins une face de butée (8, 9) formant un angle avec celle-ci, le dispositif comportant une vis (15) dont la tige filetée (14) susceptible d'être vissée dans un trou taraudé (10) du porte-outil, traverse un trou cylindrique (11) de la plaquette qui est excentré lorsque celle-ci est convenablement positionnée au contact des faces précitées et sans que la paroi de ce trou excentré touche à la tige de la vis, vis dont la tête présente une surface de contact coopérant avec la plaquette,

   caractérisé en ce que la tête (16) de la vis (15) comporte à partir de la tige (14), pour constituer la surface de contact précitée :
   - une portée tronconique (17) de faible étendue longitudinale qui est prévue, en coopérant avec le bord (20) du trou excentré (11) de la plaquette (1), pour approcher le ou les flancs (6, 7) de ladite plaquette, de la ou des faces de butée (8, 9) du porte-outil (3) et commencer à les presser l'un contre l'autre en faisant fléchir la tige (14) de la vis (15),

- une portée sensiblement cylindrique (18) qui est prévue, en coopérant avec la paroi du trou excentré (11) de la plaquette (1), pour presser davantage lesdits flancs (6, 7) contre lesdites faces (8, 9) en raccourcissant le porte-à-faux fléchissant (p) de ladite tige pour une flèche (f) sensiblement constante,
- et un épaulement (19) faisant saillie du trou excentré (11) de la plaquette (1) et qui est prévu pour serrer celle-ci contre la face d'appui (5) du porte-outil (3).

2. Dispositif selon la revendication 1, caractérisé en ce que l'épaulement (19) de la tête de vis (16) est tronconique et prévu, en coopérant avec le bord excentré (22) de la plaquette (1), pour presser progressivement ladite plaquette contre la face d'appui (5) du porte-outil (3).

3. Dispositif selon la revendication 1 ou 2, caractérisé en ce que la ou les faces de butée (8, 9) du porte-outil (3) sont, entre le dégagement (23) situé près de la face d'appui (5) et son ou leur bord extérieur (24), en dépouille (d) comprise entre 15 minutes et 1 degré pour que les flancs (6, 7) de la plaquette (1) portent d'abord contre le bord extérieur (24) de la ou desdites faces de butée (8, 9).

## Claims

1. Device for releasably clamping a cutting insert (1) on a tool-holder (3) presenting one bearing face (5) and at least one stop face (8,9) forming an angle therewith, the device comprising a screw (15) of which the threaded shank (14) adapted to be screwed in a tapped hole (10) in the tool-holder, passes through a cylindrical hole (11) in the insert which is eccentric when the latter is suitably positioned in contact with the said faces and without the wall of this eccentric holes touching the shank of the screw, screw of which the head presents a contact surface cooperating with the insert, characterized in that the head (16) of the screw (15) comprises, from the shank (14), in order to constitute said contact surface:
   - a truncated bearing surface (17) of short longitudinal extent which is provided, by cooperating with the edge (20) of the eccentric hole (11) in the insert (1), to bring the or each side (6,7) of said insert towards the or each stop face (8,9) of the tool-holder (3) and to begin to clamp them against one another, causing the shank (14) of the screw (15) to bend,
   - a substantially cylindrical bearing face (18) which is provided, by cooperating with the wall of the eccentric hole (11) in the insert (1), to press said sides (6,7) further against said faces (8,9), shortening the bending overhang (p) of said shank for a substantially constant camber (f),
   - and a shoulder (19) projecting from the eccentric hole (11) in the insert (1) and which is provided to clamp the latter against the bearing face (5) of the tool-holder (3).

2. Device according to claim 1, characterized in that the shoulder (19) of the screw head (16) is truncated and provided, by cooperating with the eccentric edge (22) of the insert (1), to press said insert progressively against the bearing face (5) of the tool-holder (3).

3. Device according to claim 1 or 2, characterized in that the or each stop face (8,9) of the tool-holder (3) is, between the recess (23) located near the bearing face (5) and its or their outer edge (24), in undercut (d) of between 15 minutes and 1 degree for the sides (6,7) of the insert (1) to bear firstly against the outer edge (24) of the or each stop face (8,9).

## Ansprüche

1. Vorrichtung zur abnehmbaren Befestigung einer Schneidplatte (1) an einem Werkzeugträger (3) mit einer Abstützfläche (5) und mindestens einer einen Winkel mit dieser einschließenden Anschlagfläche (8, 9), welche Vorrichtung eine Schraube (15) umfaßt, deren in ein Gewindeloch (10) des Werkzeugträgers einschraubbare Gewindestange (14) ein zylindrisches Loch (11) der Platte durchsetzt, welches exzentrisch ist, wenn diese zweckmäßig in Kontakt mit den genannten Flächen positioniert ist, ohne daß dabei die Wand dieses exzentrischen Lochs die Stange der Schraube berührt, wobei der Kopf der Schraube eine mit der Platte zusammenwirkende Kontaktfläche aufweist, dadurch gekennzeichnet, daß der Kopf (16) der Schraube (15) zur Bildung der genannten Kontaktfläche, ausgehend von der Stange (14), folgendes umfaßt:
   - eine kegelstumpfförmige Auflagefläche (17) von geringer Längserstreckung, die unter Zusammenwirken mit dem Rand (20) des exzentrischen Lochs (11) der Platte (1) zum Annähern der Flanke(n) (6, 7) der Platte an die Anschlagfläche(n) (8, 9) des Werkzeugträgers (3) und zum beginnenden Aneinanderpressen derselben unter Biegen der Stange (14) der Schraube (15) vorgesehen ist,

- eine im wesentlichen zylindrische Auflagefläche (18), die unter Zusammenwirken mit der Wand des exzentrischen Lochs (11) der Platte (1) zum stärkeren Pressen der Flanken (6, 7) an die Flächen (8, 9) unter Verkürzen der Durchbiegung und freien Lage (p) der Stange bei im wesentlichen konstanter Durchbiegung (f) vorgesehen ist,

- und eine vom exzentrischen Loch (11) der Platte (1) abstehende Schulter (19) die zum Festklemmen der Platte gegen die Abstützfläche (5) des Werkzeugträgers (3) vorgesehen ist.

2. Vorrichtung nach Anspruch 1, dadurch gekennzeichnet, daß die Schulter (19) des Schraubenkopfes (16) kegelstumpfförmig und zum progressiven Anpressen der Platte an die Abstützfläche (5) des Werkzeugträgers (3) unter Zusammenwirken mit dem exzentrischen Rand (22) der Platte (1) vorgesehen ist.

3. Vorrichtung nach Anspruch 1 oder 2, dadurch gekennzeichnet, daß die Anschlagfläche (n)(8, 9) des Werkzeugträgers (3) zwischen dem nahe der Abstützfläche (5) befindlichen Freiraum (23) und ihrem Außenrand bzw. ihren Außenrändern (24) in einem Freiwinkel (d) zwischen 15 min und 1 Grad liegen, damit die Flanken (6, 7) der Platte (1) zuerst am Außenrand (24) der Anschlagfläche(n) (8, 9) angreifen.

Fig-2

Fig-1

6

Fig.3

Fig.4

Fig.5